# EUROPEAN PATENT SPECIFICATION

(11) **EP 1 599 970 B1**
(45) Date of publication and mention of the grant of the patent: **20.02.2008**
(21) Application number: 04713616.3
(22) Date of filing: 23.02.2004
(51) Int. Cl.: H04L 12/28, H04Q 7/38

(54) **METHOD AND WIRELESS COMPONENT FOR AVOIDING TCP PACKET RETRANSMISSION DURING MOBILE DEVICE HANDOFF**
VERFAHREN UND DRAHTLOSER KOMPONENT ZUR VERMEIDUNG VON TCP PAKETWIEDERÜBERTRAGUNG WÄHREND DES WEITERREICHENS EINES MOBILGERÄTS
PROCEDE ET DISPOSITIF SANS FIL PERMETTANT D'EVITER LA RETRANSMISSION DE PAQUETS TCP PENDANT LE TRANSFERT DE DISPOSITIF MOBILE

(30) Priority: 27.02.2003 US 451030 P; 16.06.2003 US 478802 P
(43) Date of publication of application: 30.11.2005
(73) Proprietor: Koninklijke Philips Electronics N.V., 5621 BA Eindhoven (NL)
(72) Inventor: CHOU, Chun-Ting, Briarcliff Manor, NY 10510-8001 (US); ZHONG, Zhun, Briarcliff Manor, NY 10510-8001 (US)
(74) Representative: Eleveld, Koop Jan
(86) International application number: PCT/IB2004/000521
(87) International publication number: WO 2004/077719

(56) References cited:
- EP-A- 0 777 396
- WO-A-00/32001

## Description

The present invention generally relates to a method and system for avoiding TCP packet retransmission during mobile device handoff. Specifically, the present invention provides buffering of newly transmitted TCP packets to prevent retransmission of forwarded TCP packets that have been delayed.

As wireless networks become more pervasive, the capabilities of mobile devices are increasing. For example, today many mobile devices (e.g., cellular telephones, personal digital assistants, laptop computers, etc.) are capable of connecting to networks through a wireless connection. In general, to connect to a wireless network, a mobile device must associate with certain components therein such as an "access point." Due to their inherent portability, mobile devices are often "handed-off" from one access point to another. Specifically, as a mobile device user migrates away from an access point with which his/her device is associated, the connection therewith will degrade and eventually fail. To prevent failure of the end-to-end connection, the mobile device must find and associate with any available access point.

As known, a wireless network can have multiple subnetworks. Each subnetwork will generally include, among other components, a mobility agent and a set (e.g., one or more) access points with which mobile devices can associate. A single subnetwork could represent, for example, all of the "machines" at a single geographic location, in the same building, or on the same local area network (LAN), etc. Having a network divided into subnetworks can provide several advantages. For example, subnetworks allow the network to be connected to the Internet with a single shared network address. Although an organization could get multiple connections to the Internet without subnetworks, it would require an unnecessary use of the limited number of network addresses the Internet has to assign.

Typically, under the Open Systems Interconnection layer model, a wireless subnetwork has several "layers." Layer 1 is referred to as the physical, layer 2 is referred to as the link layer (which includes LLC and medium access control (MAC)), layer 3 is referred to as the network layer, and layer 4 is referred to as the transportation layer. As a mobile device migrates, handoffs could be necessary on one or more of the layers. For example, as indicated above, if a mobile device migrates within a single wireless subnetwork, a layer 2 (link layer) handoff between access points could be necessary. If the mobile device migrates between two subnetworks, a layer 3 (network layer) handoff between mobility agents as well as a layer 2 handoff between access points is necessary. In general, a layer 2 handoff is managed according to the I.E.E.E. 802.11(f) standard, while a layer 3 handoff is handled according to the Mobile IP standard.

Due to intrinsic differences in handoff processes, a layer 3 handoff is substantially more time consuming than a layer 2 handoff. Specifically, under the Mobil IP standard, a "mobility" agent in the access router of a given subnet transmits " beacons" approximately every one second. The beacons are received by the mobile device as a way of verifying that it is connected to that particular subnetwork. If the mobile device migrates out of the region covered by the first subnetwork, the beacons will be missed (e.g., either they will not be received, or they will not be received with sufficient "strength"). In any event, if the mobile device misses three consecutive beacons, the Mobil IP standard dictates that it must search for a new subnetwork (i.e., attempt to associate with a new mobility agent).

Several problems can arise, however, during the layer 3 hand-off process. Specifically, since the mobile device must wait for three agent beacons to be missed before attempting to associate with an agent, at least three seconds will elapse. This latency not only delays communication to and from the mobile device, but it can also lead to TCP packet loss. For example, until the mobile device has completed the layer 3 handoff, any TCP packets intended for the mobile device will be transmitted to the previous subnetwork with which the mobile device was associated. The TCP packets will be buffered at the previous access point and then forwarded to the new wireless subnetwork. Once the layer 3 handoff is complete, newly transmitted TCP packets will be transmitted directly to the new subnetwork.

Unfortunately, because the newly transmitted TCP packets are transmitted directly to the new subnetwork, there is a high likelihood that they might arrive prior to some of the forwarded TCP packets even though the newly transmitted TCP packets were transmitted later. Accordingly, some of the TCP packets could be received out of sequence, which could trigger TCP packet retransmission. For example, under standard "TCP" practice, as a TCP packet is transmitted, a timer is started. If an "acknowledgement" is not received back from the mobile device within the allotted time period, the TCP packet is retransmitted. If the mobile device receives a TCP packet out of order, an "acknowledgement" to the most recently received in-order packet will be transmitted back to the TCP sender. This acknowledgement would essentially amount to a "request" for the missing data packet. For example, assume that TCP packets "1-10" were transmitted from a TCP sender intended for a mobile device. Further assume that TCP packets "1-3" must be forwarded to the new wireless subnetwork from a previous access point, while TCP packets "4-10" are directly transmitted to the new wireless subnetwork from the TCP sender. If TCP packet "4" were received first, an initial request for TCP packet "1" would be sent back to the TCP sender. If TCP packet "5" was received next, a second request for TCP packet "1" would be sent. If TCP packet "6" were received third, yet another request for TCP packet "1" would be sent back to the TCP sender. If TCP packet "7" were received next, a fourth request would be sent back to the TCP sender. However, under standard "TCP" practices, this fourth request would trigger retransmission of TCP packet "1" by the data source. Accordingly, TCP packet "1" would be retransmitted as if it were lost even though it was simply delayed by the forwarding process.

In an attempt to address this, previous systems have implementing a buffering scheme whereby all newly transmitted TCP packets are buffered at the new agent until all forwarded TCP packets arrive. However, due to the long latency period involved with layer 3 handoff, there could be a large quantity of buffered TCP packets, which could lead to buffer overflow and packet loss.

Document EP 0 777 396 describes maintaining the composition of transferred data during handover in a radio data transmission system. Transmission of cells (packets) is synchronized between the new and old bases stations involved in the handover. Information on the last cell that was transmitted successfully by the old base station is transferred, and the new station starts by transmitting the first failed cell. Hence cells are transmitted in the right order.

In view of the foregoing, there exists a need for a method and system for avoiding TCP packet retransmission during mobile device handoff. Specifically, a need exists for an improved buffer scheme that can avoid TCP packets being transmitted to a mobile device out of order, without overflowing the buffer and triggering TCP retransmission.

In general, the present invention provides a method as defined in claim 1, and a wireless component as defined in claim 13, in a system for avoiding TCP packet retransmission during mobile device handoff. Specifically, under the present invention, a set (e.g., one or more) of forwarded TCP packets and a set (e.g., one or more) of newly transmitted TCP packets are received by a wireless component (an access point or a mobile device). As known, each TCP packet in both sets has a sequence number that identifies its order in the overall packet stream. For each of a quantity of tokens present on the wireless component, one "out of order" newly transmitted TCP packet can be passed. Specifically, if a newly transmitted TCP packet is received before a forwarded TCP packet having a lower sequence number, it can be passed only if a token is present. To this extent, if the wireless component is an access point, "passing" of a newly transmitted TCP packet means that the newly transmitted TCP packet is transmitted to a mobile device. If the wireless component is the mobile device itself, "passing" of a newly transmitted TCP packet means that the mobile device will process (or be allowed to process) the newly transmitted TCP packet. In any event, each newly transmitted TCP packet that is passed will cause the quantity of tokens to be reduced by one. Once the tokens are expended, the newly transmitted TCP packets must be buffered on the wireless component. In an embodiment, when a forwarded TCP packet is received and passed, the quantity of tokens will be restored to a predetermined quantity (=3). The restoration of the tokens will allow a commensurate number of buffered TCP packets to be passed.

A first aspect of the present invention provides a method for avoiding TCP packet retransmission during mobile device handoff, comprising: receiving a set of newly transmitted TCP packets for the mobile device on an access point; checking a sequence number of each of the set of newly transmitted TCP packets to identify a set of out of order TCP packets; transmitting one of the set of out of order TCP packets to the mobile device for each of a quantity of tokens present on the access point, and reducing the quantity of tokens by one for each out of order TCP packet transmitted to the mobile device; receiving a forwarded TCP packet from a previous access point with which the mobile device was associated; and transmitting the forwarded TCP packet to the mobile device, and, optimally, restoring the quantity of tokens to a predetermined quantity if the forwarded TCP packet was previously requested by the mobile device.

A second aspect of the present invention provides a wireless component for avoiding TCP packet retransmission during mobile device handoff, the wireless component configured to receive a set of newly transmitted TCP packets on a wireless component, to check a sequence number of each of the newly transmitted TCP packets to identify a set of out of order TCP packets, to pass one of the set of out of order TCP packets for each of a quantity of tokens present on the wireless component, and to reduce the quantity of tokens by one for each out of order TCP packet that is passed.

Therefore, the present invention provides a method and a wireless component for avoiding TCP packet retransmission during mobile device handoff.

These and other features of this invention will be more readily understood from the following detailed description of the various aspects of the invention taken in conjunction with the accompanying drawings in which:
Fig. 1 depicts a diagram of a wireless network having two subnetworks.
Fig. 2 depicts a flow diagram of TCP packet passing and buffering, according to the present invention.
Fig. 3 depicts a block diagram of a mobile device and an access point in accordance with the present invention.

The drawings are merely schematic representations, not intended to portray specific parameters of the invention. The drawings are intended to depict only typical embodiments of the invention, and therefore should not be considered as limiting the scope of the invention. In the drawings, like numbering represents like elements.

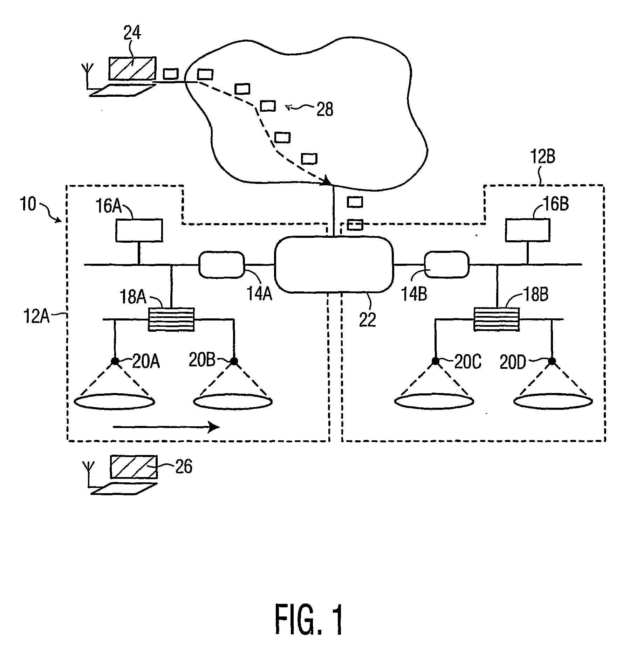

Referring now to Fig. 1, a wireless network 10 having two wireless subnetworks 12A-B is shown. As depicted, both wireless subnetworks 12A-B include similar components. Such components include, routers 14A-B, foreign/mobility agents 16A-B, media access control (MAC) bridges 18A-B and access points 20A-D. Gateway 22 resides between wireless subnetworks 12A-B to route TCP packets received from correspondent node/device 24 to mobile device 26. In general, routers 14A-B and mobility agents 16A-B can be considered layer 3 (network layer) components, while MAC bridges 18A-B and access points 20A-D can be considered layer 2 (link layer) components. In any event, to connect to a particular subnetwork, mobile device 26 will associate with a mobility agent and an access point therein. After the association, any TCP packets destined for mobile device 26 from correspondent device 24 will be transmitted to mobile device 26 through the router, MAC bridge and access point of the wireless subnetwork with which the mobile device 26 is associated. It should be understood that wireless network 10 is intended to be illustrative only and that other components could be included and/or implementations could be exist. To this extent, it should also be appreciated that the quantity of components (e.g., access points) shown is also illustrative and not intended to be limiting. Still yet, it should be appreciated that mobility agents 16A-B are typically part of, or are connected to, routers 14A-B, They have not been shown as such in Fig. 1 for conceptual purposes only.

As indicated above, handoff of mobile device 26 can raise various issues. Such issues can arise whether mobile device 26 is handed off within a particular wireless subnetwork from access point to access point (e.g., from access point 20A to access point 20B) or between wireless subnetworks (e.g., from wireless subnetwork 12A to wireless subnetwork 12B). Specifically, whenever mobile device 26 is handed off, certain TCP packets 28 will have to be forwarded while others can be directly transmitted after a handoff. For example, if mobile device is handed off from access point 20A to access point 20B, some TCP packets will be received by access point 20A during the handoff process, and must be forwarded to access point 20B. Still yet, after handoff, newly generated TCP packets will be directly transmitted to access point 20B. Although the I.E.E.E. 802.11(f) standard provides some communication between access points 20A-D), the packet buffering is not effectively managed and could overflow and lead to TCP packet loss.

This effect can be magnified when mobile device 26 is handed off from wireless subnetwork 12A to wireless subnetwork 12B. Specifically, as indicated above, for such a handoff to occur, mobile device 26 must be handed off both on layer 2 as well as layer 3. That is, mobile device 26 must associate with both a mobility agent (e.g., agent 16B) and an access point (e.g., access point 20C) of wireless subnetwork 12B. Due to the long latency period involved with the layer 3 handoff (e.g., at least three seconds), there is a higher likelihood that newly transmitted TCP packets (e.g., TCP packets transmitted after the handoff that can be directly routed to subnetwork 12B), will arrive before previously transmitted TCP packets that must be forwarded from access point 20B. Thus, the newly transmitted TCP packets could arrive at access point 20C out of sequence. As also indicated above, each TCP packet received out of sequence would result in a duplicate acknowledgement for the appropriate TCP packet being transmitted back to correspondent device 24. However, under "TCP" practices, a fourth duplicate acknowledgement would trigger retransmission of a TCP packet that may only be delayed (not lost).
Although buffering can be provided at agent 16B under the Mobil IP standard or at access point 20C under I.E.E.E. 802.11standard, no previous system managed the buffer in such a way that would avoid buffer overflow or TCP packet retransmission.

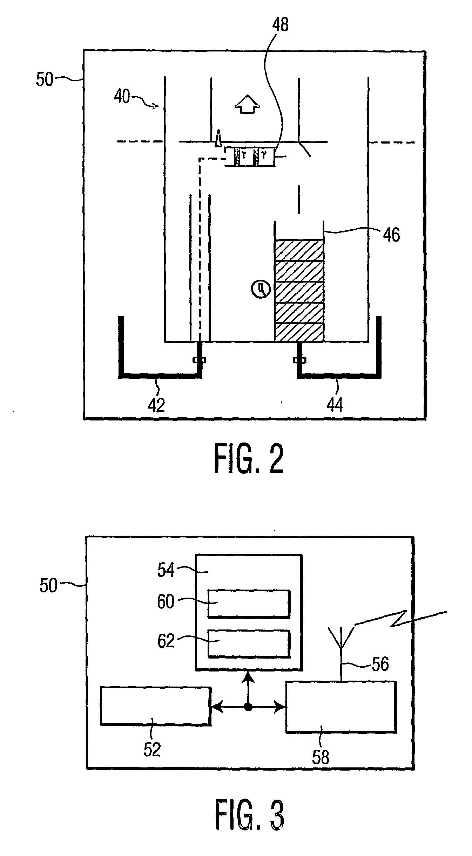

Under the present invention, either the access points (e.g., access point 20B or 20C) or mobile device 26 can be configured in such a way that TCP packet retransmission and TCP packet loss are avoided. Specifically, referring to Fig. 2, a buffer management scheme 40 according to the present invention is shown. It should be understood in advance that although buffer management scheme 40 is typically implemented on an access point (e.g., access points 20A-D), it could be implemented on either an access point or mobile device 26. To this extent, access points 20A-D and mobile device 26 will be collectively referred to herein as a wireless component 50. In any event, received by buffer management system 40 are a set (e.g., one or more) of forwarded TCP packets 42 and a set (e.g., one or more) of newly transmitted TCP packets 44. Forwarded TCP packets 42 represent TCP packets forwarded from another access point (e.g., from access point 20B to access point 20C), while TCP packets 44 represent TCP packets transmitted directly from correspondent device 24 (Fig. 1). It should be understood that buffer management scheme 40 can be used for intra or inter subnetwork handoff of mobile device 26. For example, buffer scheme 40 is applicable whether mobile device 26 is handed off from access point 20A to access point 20B (intra-subnetwork handoff), or handed off from access point 20B to access point 24C (inter-subnetwork) handoff.

Under the present invention, forwarded TCP packets 42 are allowed to pass directly to mobile device 26, while newly transmitted TCP packets 44 are subject to possible buffering in buffer 46. Specifically, as know in the art, each TCP packet in a stream is assigned a sequence number that indicates the order of that TCP packet in the stream. In general, a first TCP packet will have a lower sequence number than a second TCP packet in the same stream. As indicated above, forwarding of TCP packets can cause a stream of TCP packets to become out of order. For example, assume that a stream is made up of TCP packets "1-10." Further assume that TCP packets "1-3" were received by a previous access point with which mobile device 26 was associated. As such, TCP packets "1-3" must be forwarded to the new access point. Also assume that TCP packets "4-10" of the stream are newly transmitted. That is, TCP packets "4-10" are transmitted from correspondent device 24 and are routed directly to the new access point. When TCP packet 4 is received, standard TCP practices dictate that an acknowledgement be generated and sent back to correspondent device 24 that indicates that TCP packet 4 was received. As described above, this acknowledgement would indicate that TCP packet "1" was not received. If TCP packets "5-7" were received next, a second, third and fourth such acknowledgement would be generated. Under "TCP" practices, the third duplicate acknowledgement would cause correspondent device 24 to re-send TCP packet "1." Thus, even though packet "1" was not lost, it would be re-transmitted. To address this problem, buffer management system 40 provides a quantity of tokens 48. For each token 48 present, one newly transmitted TCP packet 44 that is out of order will be "passed." To this extent, if wireless component 50 is an access point, one out of order newly transmitted TCP packet 44 will be transmitted to mobile device 26 for each token present on the access point. If wireless device 50 is mobile device 26, one out of order newly transmitted TCP packet 44 will be processed (or allowed to be processed) by mobile device for each token present. In either scenario, for each out of order newly transmitted TCP packet 44 that is passed, the quantity of tokens 48 on wireless device 50 will be reduced by one. In a typical embodiment, tokens 48 are provided in a predetermined quantity that is less than the quantity of requests that would trigger retransmission of a TCP packet. For example, if three duplicate acknowledgement for a missing TCP packet would cause correspondent device 24 to retransmit a TCP packet (e.g., TCP packet "1"), buffer management system 40 would include three tokens.

Using the example above, assume that three tokens 48 are present. If TCP packet "4" was received first, it would be passed and two tokens would remain (and a first acknowledgement/request for TCP packet "1" would be transmitted). If TCP packet "5" was received next, it would be passed and only one token would remain (and a second acknowledgement/request for TCP packet "1" would be transmitted. If TCP packet "6" was received next, it would also be passed and no tokens would remain (and a third acknowledgement/request for TCP packet "1" would be transmitted). If TCP packet "7" was received next, it would be stored in buffer 46 since no tokens remain. This would prevent TCP packet "7" from passing to mobile device 26 and a fourth request for "missing" TCP packet 1 from being generated. Thus, retransmission of TCP packet "1" is avoided. Similarly, if TCP packet "8" was received next, it would also be stored in buffer 46 to avoid retransmission of TCP packet "1." If, however, TCP packet "1" was received after TCP packet "8," it would be passed and tokens 48 would be replenished. That is, tokens 48 are restored to the predetermined quantity (e.g., 3) when a requested TCP packet (i.e., a requested forwarded TCP packet) is received and passed.

Once tokens 48 have been replenished, TCP packets "7" and "8" would be passed with each consuming one token. Thus, only one token 48 would remain and a first and second acknowledgement/request for missing TCP packet "2" would be transmitted to correspondent device 24. If TCP packets "9" and "10" arrived next, TCP packet "9" would be passed and no tokens would remain (and a third acknowledgement for TCP packet "2" would be transmitted). Because there are no tokens 48 left after passing TCP packet "9," TCP packet "10" would be stored in buffer 46 until TCP packet "2" passed and tokens 48 were once again restored to the predetermined quantity. This process would continue until all TCP packets had been passed.

It should be understood that the present invention can be realized in hardware, software, or a combination of hardware and software. To this extent, the teachings of the present invention could be implemented through software-based or hardware-based means within the wireless components (access point and/or mobile device). Any kind components adapted for carrying out the methods described herein - is suited. A typical combination of hardware and software could be a component with a computer program that, when loaded and executed, carries out the respective methods described herein. Alternatively, a specific use component, containing specialized hardware for carrying out one or more of the functional tasks of the invention, could be utilized. The present invention can also be embedded in a computer program product, which comprises all the respective features enabling the implementation of the methods described herein, and which - when loaded in a computer system - is able to carry out these methods. Computer program, software program, program, or software, in the present context mean any expression, in any language, code or notation, of a set of instructions intended to cause a system having an information processing capability to perform a particular function either directly or after either or both of the following: (a) conversion to another language, code or notation; and/or (b) reproduction in a different material form.

Referring now to Fig. 3, a block diagram of wireless component 50 according to the present invention is shown. The block diagram illustrates that the teachings of the present invention (e.g., buffer management system 40) could be implemented as hardware, software or a combination of the two. Moreover, the block diagram demonstrates that buffer management system 40 could be implemented on either mobile device 26 or access points 20A-D. It should also be understood in advance that the block diagram shown in Fig. 3 is intended to be illustrative only, and that a mobile device or access point will likely contain additional elements not shown. In any event, as depicted, wireless device 50 generally includes processor 52, memory 54, transmitter/receiver 56 and active packetizer 58.

Memory 54 of wireless component 50 can include data 60 and/or program code 62 for carrying out the functions of the present invention described herein. For example, assume that buffer management system 40 of Fig. 2 is implemented as program code 62 within wireless component 50 (although it could be implemented as hardware such as in processor 52). As TCP packets are received via transmitter/receiver 56, wireless component 50 is configured to check the sequence number thereof to determine if the TCP packets are being received out of order. If a newly transmitted TCP packet is received out of order (e.g., if a newly transmitted TCP packet is received before a forwarded TCP packet with a lower sequence number), wireless component 50 will pass it only if a token is present. To this extent, if wireless component 50 is an access point, one newly transmitted TCP packet will be transmitted to mobile device 26 for each token present. Conversely, if wireless component 50 is a mobile device, one newly transmitted TCP packet will be processed for each token present. In any event, for each newly transmitted TCP packet that is passed, the quantity of tokens will be reduced by one and an acknowledgement/request for the correct TCP packet will be transmitted. Once all of the tokens are expended, any newly transmitted TCP packets that are received before the "requested" forwarded TCP packet are buffered in memory 54 until the forwarded TCP packet arrives. After the arrival of the forwarded TCP packet, the quantity of tokens will restored to the predetermined quantity (e.g., three), and a commensurate amount of buffered TCP packets will be passed.

Accordingly, under the present invention, wireless component 50 is configured to: receive both forwarded and newly transmitted TCP packets; check the sequence number of each TCP packet to identify a set (e.g., one or more) of out of order (newly transmitted) TCP packets; pass one out of order TCP packet for each token present; reduce the number of tokens by one for each out of order TCP packet that is passed; buffer any out of order TCP packets that are not passed; pass any forwarded TCP packets; and restore the quantity of tokens to a predetermined quantity when a "requested" forwarded TCP packet is passed.

The foregoing description of the preferred embodiments of this invention has been presented for purposes of illustration and description. It is not intended to be exhaustive or to limit the invention to the precise form disclosed, and obviously, many modifications and variations are possible. Such modifications and variations that may be apparent to a person skilled in the art are intended to be included within the scope of this invention as defined by the accompanying claims.

## Claims

1. A method for avoiding TCP packet retransmission during mobile device (26) handoff to an access point (20C) from a previous access point (20B) with which the mobile device (26) was associated, comprising:
receiving a set of newly transmitted TCP packets (44) on a wireless component (50), the wireless component being the access point or the mobile device,
**characterized in that** the method comprises:
checking a sequence number of each TCP packet of the set of newly transmitted TCP packets (44) to identify a set of out of order TCP packets;
passing for transmission by the access point or for processing by the mobile device, one TCP packet of the set of out of order TCP packets for each of a predetermined quantity of tokens (48) present on the wireless component (50); and
reducing the quantity of tokens (48) by one for each out of order TCP packet that is passed.

2. The method of claim 1, further comprising, buffering each TCP packet of the set of out of order TCP packets that is not passed.

3. The method of claim 1, further comprising:
receiving a forwarded TCP packet (42) on the wireless component (50);
passing the forwarded TCP packet (42); and
restoring the quantity of tokens (48) to a predetermined quantity if the forwarded TCP packet (42) was previously requested.

4. The method of claim 3, wherein the forwarded TCP packet (42) and the set of newly transmitted TCP packets (44) comprise a stream of TCP packets.

5. The method of any of the claims 1 to 4, wherein the wireless component (50) is the access point (20C), and wherein the passing step comprises transmitting one TCP packet of the set of out of order TCP packets from the access point (20C) to the mobile device (26) for each of the quantity of tokens (48) present on the access point (20C).

6. The method of claim 5, wherein the forwarded TCP packet (42) is received on the access point (20C) from a previous access point (20B) with which the mobile device (26) was associated.

7. The method of claim 1, wherein the wireless component (50) is a mobile device (26), and wherein the passing step comprises receiving one TCP packet of the set of out of order TCP packets and allowing the TCP packet to be processed by the mobile device (26) for each of the quantity of tokens (48) present on the mobile device (26).

8. The method of claim 1, wherein the quantity of tokens (48) comprises three tokens.

9. The method of claim 5, comprising:
receiving a forwarded TCP packet (42) from the previous access point (20B) with which the mobile device (26) was associated; and
communicating the forwarded TCP packet (42) to the mobile device (26), and restoring the quantity of tokens (48) to a predetermined quantity if the forwarded TCP packet (42) was previously requested by the mobile device (26).

10. The method of claim 9, further comprising buffering each TCP packet of the set out of order TCP packets that is not transmitted to the mobile device (26).

11. The method of claim 10, further comprising communicating one TCP packet of the buffered TCP packets to the mobile device (26) for each of the restored quantity of tokens (48), wherein the quantity of tokens (48) is reduced by one for each buffered TCP packet transmitted to the mobile device (26).

12. The method of claim 9, wherein the quantity of tokens (48) comprises three tokens.

13. A wireless component, the wireless component being an access point or a mobile device, in a system for avoiding TCP packet retransmission during mobile device (26) handoff to an access point (20C) from a previous access point (20B) with which the mobile device (26) was associated, the wireless component (50) having means for receiving a set of newly transmitted TCP packets (44) on the wireless component (50),
**characterized in that** the wireless component comprises means for:
checking a sequence number of each TCP packet of the set of newly transmitted TCP packets to identify a set of out of order TCP packets,
passing for transmission by the access point or for processing by the mobile device, one TCP packet of the set of out of order TCP packets for each of a predetermined quantity of tokens (48) present on the wireless component (50), and
reducing the quantity of tokens (48) by one for each out of order TCP packet that is passed.

14. The wireless component of claim 13, wherein the wireless component (50) has means for buffering each TCP packet of the set of out of order TCP packets that are not passed.

15. The wireless component of claim 13, wherein the wireless component (50) has means for receiving a forwarded TCP packet (42), passing the forwarded TCP packet (42), and restoring the quantity of tokens (48) to a predetermined quantity if the forwarded TCP packet (42) was previously requested.

16. The wireless component of claim 13, wherein the wireless component (50) is the access point (20C), and wherein the access point (20C) has means for passing the set of out of order TCP packets by transmitting one TCP packet of the set of out of order TCP packets to the mobile device (26) for each of the quantity of tokens (48) present on the access point (20C).

17. The wireless component of claim 16, wherein the access point (20C) has means for receiving the forwarded TCP packet from the previous access point (20B) with which the mobile device (26) was associated.

18. The wireless component of claim 13, wherein the wireless component (50) is the mobile device (26), and wherein the mobile device (26) has means for passing the set of out of order TCP packets by receiving one TCP packet of the set of out of order TCP packets and allowing the TCP packet to be processed by the mobile device for each of the quantity of tokens (48) present on the mobile device.

19. The wireless component of claim 13, wherein the quantity of tokens (48) comprises three tokens.

20. Computer program product comprising a set of instructions stored thereon, which when executed by a processor implement the steps of claims 1-12.

## Patentansprüche

1. Verfahren zur Vermeidung von TCP Paketneuübertragung während der Übergabe eines Mobilgeräts (26) zu einem Zugriffspunkt (20C) von einem vorhergehenden Zugriffspunkt (20B), mit dem das Mobilgerät (26) assoziiert war, wobei dieses Verfahren den nachfolgenden Verfahrensschritt umfasst:
- das Empfangen eines Satzes neu übertragener TCP Pakete (44) in einem drahtlosen Element (50), wobei das drahtlose Element der Zugriffspunkt oder das Mobilgerät ist,
**dadurch gekennzeichnet, dass** das Verfahren weiterhin die nachfolgenden Verfahrensschritte umfasst:
- das Überprüfen einer Folgenummer jedes TCP Pakets des Satzes neu übertragener TCP Pakete (44) zum Identifizieren eines Satzes gestörter TCP Pakete;
- das Weiterleiten zur Übertragung durch den Zugriffspunkt oder zum Verarbeiten durch das Mobilgerät, eines einzigen TCP Pakets des Satzes gestörter TCP Pakete für jeden einer vorbestimmten Anzahl von Zeichen (48), anwesend in dem drahtlosen Komponenten (50); und
- das Reduzieren der Menge Zeichen (48) um eins für jedes gestörte TCP Paket, das weitergeleitet wird.

2. Verfahren nach Anspruch 1, das weiterhin Folgendes umfasst: das Puffern jedes TCP Pakets des Satzes gestörter TCP Pakete, das nicht weitergeleitet wird.

3. Verfahren nach Anspruch 1, das weiterhin Folgendes umfasst:
- das Empfangen eines transportierten TCP Pakets (42) an dem drahtlosen Komponenten (50):
- das Weiterleiten des transportierten TCP Pakets (42); und
- das Wiederherstellen der Menge Zeichen (48) zu einer vorbestimmten Menge, wenn das transportierte TCP Paket (42) vorher beantragt wurde.

4. Verfahren nach Anspruch 3, wobei das transportierte TCP Paket (42) und der Satz neu übertragener TCP Pakete (44) einen Strom von TCP Paketen enthält.

5. Verfahren nach einem der Ansprüche 1 bis 4, wobei das drahtlose Element (50) der Zugriffspunkt (20C) ist, und wobei der Weiterleitungsschritt das Übertragen eines einzigen TCP Pakets des Satzes gestörter TCP Pakete von dem Zugriffspunkt (20C) zu dem Mobilgerät (26) für jedes Zeichen der an dem Zugriffpunkt (20C) anwesenden Menge Zeichen (48) umfasst.

6. Verfahren nach Anspruch 5, wobei das transportierte TCP Paket (42) in dem Zugriffspunkt (20C) von einem vorhergehenden Zugriffspunkt (20B) empfangen wird, mit dem das Mobilgerät (26) assoziiert war.

7. Verfahren nach Anspruch 1, wobei das drahtlose Element (50) ein Mobilgerät (26) ist, und wobei der Weiterleitungsschritt das Empfangen eines einzigen TCP Pakets des Satzes gestörter TCP Pakete umfasst, sowie das Gestatten, dass das TCP Paket von dem Mobilgerät (26) für jedes Zeichen der Menge Zeichen (48), die in dem Mobilgerät (26) anwesend sind, verarbeitet wird.

8. Verfahren nach Anspruch 1, wobei die Menge Zeichen (48) drei Zeichen umfasst.

9. Verfahren nach Anspruch 5, das die nachfolgenden Verfahrensschritte umfasst:
- das Empfangen eines transportierten TCP Pakets (42) von dem vorhergehenden Zugriffspunkt (20B), mit dem das Mobilgerät (26) assoziiert war; und
- das Zuführen des transportierten TCP Pakets (42) zu dem Mobilgerät (26), und das Wiederherstellen der Menge Zeichen (48) zu einer vorbestimmten Menge, wenn das transportierte TCP Paket (42) vorher von dem Mobilgerät (26) beantragt wurde.

10. Verfahren nach Anspruch 9, das weiterhin das Puffern jedes TCP Pakets des Satzes gestörter TCP Pakete umfasst, das nicht zu dem Mobilgerät (26) transportiert wurde.

11. Verfahren nach Anspruch 10, das weiterhin das Zuführen eines einzigen TCP Pakets der gepufferten TCP Pakete zu dem Mobilgerät (26) für jedes Zeichen der wiederhergestellten Menge Zeichen (48) umfasst, wobei die Menge Zeichen (48) für jedes gepufferte TCP Paket, das zu dem Mobilgerät (26) übertragen wird, um eins reduziert wird.

12. Verfahren nach Anspruch 9, wobei die Menge Zeichen (48) drei Zeichen umfasst.

13. Drahtloses Element, wobei dieses drahtlose Element ein Zugriffspunkt oder ein Mobilgerät ist, in einem System um TCP Paketneuübertragung während der Übergabe (26) des Mobilgeräts zu einem Zugriffspunkt (20C) von einem vorhergehenden Zugriffspunkt (20B), mit dem das Mobilgerät (26) assoziiert war, zu vermeiden, wobei das drahtlose Element (50) Mittel aufweist zum Empfangen eines Satzes neu übertragener TCP Pakete (44) in dem drahtlosen Element (50),
**dadurch gekennzeichnet, dass** das drahtlose Element Mittel aufweist zum:
- Überprüfen einer Folgenummer jedes TCP Pakets des Satzes neu übertragener TCP Pakete zum Identifizieren eines Satzes gestörter TCP Pakete,
- Weiterleiten zur Übertragung durch den Zugriffspunkt oder zur Verarbeitung durch das Mobilgerät, eines einzigen TCP Pakets des Satzes gestörter TCP Pakete für jedes Zeichen einer vorbestimmten Menge in dem drahtlosen Element (50) anwesender Zeichen (48), und
- Reduzieren der Menge Zeichen (48) um eins für jedes gestörte TCP Paket, das weitergeleitet wird.

14. Drahtloses Element nach Anspruch 13, wobei das drahtlose Element (50) Mittel aufweist zum Puffern jedes TCP Pakets des Satzes gestörter TCP Pakete, die nicht weitergeleitet werden.

15. Drahtloses Element nach Anspruch 13, wobei das drahtlose Element (50) Mittel aufweist zum Empfangen einer transportierten TCP Pakets (42), zum Weiterleiten des transportierten TCP Pakets (42), und zum Wiederherstellen der Menge Zeichen (48) auf eine vorbestimmte Menge, wenn das transportierte TCP Paket (42) vorher beantragt wurde.

16. Drahtloses Element nach Anspruch 13, wobei das drahtlose Element (50) der Zugriffspunkt (20C) ist und wobei der Zugriffspunkt (20C) Mittel aufweist zum Weiterleiten des Satzes gestörter TCP Pakete durch Übertragung eines einzigen TCP Pakets des Satzes gestörter TCP Pakete zu dem Mobilgerät (26) für jedes Zeichen der Menge Zeichen (48), die in dem Zugriffspunkt (20C) vorhanden sind.

17. Drahtloses Element nach Anspruch 16, wobei der Zugriffspunkt (20C) Mittel aufweist zum Empfangen des transportierten TCP Pakets von dem vorhergehenden Zugriffspunkt (20B), mit dem das Mobilgerät (26) assoziiert war.

18. Drahtloses Element nach Anspruch 13, wobei das drahtlose Element (50) das Mobilgerät (26) ist, und wobei das Mobilgerät (26) Mittel aufweist zum Weiterleiten des Satzes gestörter TCP Pakete durch Empfang eines einzigen TCP Pakets des Satzes gestörter TCP Pakete und um zu gestatten, dass das TCP Paket von dem Mobilgerät verarbeitet wird, und zwar für jedes Zeichen der Menge Zeichen (48), die in dem Mobilgerät vorhanden sind.

19. Drahtloses Element nach Anspruch 13, wobei die Menge Zeichen (48) drei Zeichen umfasst.

20. Computerprogrammprodukt mit einem Satz Instruktionen, die darin gespeichert sind, die, wenn von einem Prozessor durchgeführt, die Verfahrensschritte nach Anspruch 1-12 implementieren.

## Revendications

1. Procédé permettant d'éviter une réémission de paquets TCP pendant un transfert d'un dispositif mobile (26) vers un point d'accès (20C) à partir d'un point d'accès précédent (20B) auquel le dispositif mobile (26) était associé, comprenant:
la réception d'un ensemble de paquets TCP nouvellement émis (44) par un composant sans fil (50), le composant sans fil étant le point d'accès ou le dispositif mobile,
**caractérisé en ce que** le procédé comprend:
la vérification d'un numéro de séquence de chaque paquet TCP de l'ensemble de paquets TCP nouvellement émis (44) pour identifier un ensemble de paquets TCP hors séquence;
l'acceptation, pour émission par le point d'accès ou pour traitement par le dispositif mobile, d'un paquet TCP de l'ensemble de paquets TCP hors séquence pour chaque jeton d'une quantité prédéterminée de jetons (48) présents dans le composant sans fil (50); et
la réduction de la quantité de jetons (48) d'une unité pour chaque paquet TCP hors séquence qui est accepté.

2. Procédé selon la revendication 1, comprenant de plus une mise en tampon de chaque paquet TCP de l'ensemble de paquets TCP hors séquence qui n'est pas accepté.

3. Procédé selon la revendication 1, comprenant de plus:
la réception d'un paquet TCP transféré (42) dans le composant sans fil (50);
l'acceptation du paquet TCP transféré (42); et
la restauration de la quantité de jetons (48) à une quantité prédéterminée si le paquet TCP transféré (42) avait précédemment été demandé.

4. Procédé selon la revendication 3, dans lequel le paquet TCP transféré (42) et l'ensemble de paquets TCP nouvellement émis (44) comprennent une séquence de paquets TCP.

5. Procédé selon l'une quelconque des revendications 1 à 4, dans lequel le composant sans fil (50) est le point d'accès (20C), et dans lequel l'étape d'acceptation comprend l'émission d'un paquet TCP de l'ensemble de paquets TCP hors séquence du point d'accès (20C) au dispositif mobile (26) pour chaque jeton de la quantité de jetons (48) présents dans le point d'accès (20C).

6. Procédé selon la revendication 5, dans lequel le paquet TCP transféré (42) est reçu dans le point d'accès (20C) à partir d'un point d'accès précédent (20B) auquel le dispositif mobile (26) était associé.

7. Procédé selon la revendication 1, dans lequel le composant sans fil (50) est un dispositif mobile (26), et dans lequel l'étape d'acceptation comprend la réception d'un paquet TCP de l'ensemble de paquets TCP hors séquence et la permission de traitement du paquet TCP par le dispositif mobile (26) pour chaque jeton de la quantité de jetons (48) présents dans le dispositif mobile (26).

8. Procédé selon la revendication 1, dans lequel la quantité de jetons (48) comprend trois jetons.

9. Procédé selon la revendication 5, comprenant:
la réception d'un paquet TCP transféré (42) du point d'accès précédent (20B) auquel le dispositif mobile (26) était associé; et
la communication du paquet TCP transféré (42) au dispositif mobile (26), et la restauration de la quantité de jetons (48) à une quantité prédéterminée si le paquet TCP transféré (42) avait précédemment été demandé par le dispositif mobile (26).

10. Procédé selon la revendication 9, comprenant de plus la mise en tampon de chaque paquet TCP de l'ensemble de paquets TCP hors séquence qui n'est pas émis vers le dispositif mobile (26).

11. Procédé selon la revendication 10, comprenant de plus la communication d'un paquet TCP parmi les paquets TCP mis en tampon vers le dispositif mobile (26) pour chacun jeton de la quantité restaurée de jetons (48), dans lequel la quantité de jetons (48) est réduite d'une unité pour chaque paquet TCP mis en tampon émis vers le dispositif mobile (26).

12. Procédé selon la revendication 9, dans lequel la quantité de jetons (48) comprend trois jetons.

13. Composant sans fil, le composant sans fil étant un point d'accès ou un dispositif mobile, dans un système permettant d'éviter une réémission de paquets TCP pendant un transfert d'un dispositif mobile (26) vers un point d'accès (20C) à partir d'un point d'accès précédent (20B) auquel le dispositif mobile (26) était associé, le composant sans fil (50) comprenant des moyens pour recevoir un ensemble de paquets TCP nouvellement émis (44) dans le composant sans fil (50),:
**caractérisé en ce que** le composant sans fil comprend des moyens pour:
vérifier un numéro de séquence de chaque paquet TCP de l'ensemble de paquets TCP nouvellement émis pour identifier un ensemble de paquets TCP hors séquence;
accepter, pour émission par le point d'accès ou pour traitement par le dispositif mobile, un paquet TCP de l'ensemble de paquets TCP hors séquence pour chaque jeton d'une quantité prédéterminée de jetons (48) présents dans le composant sans fil (50); et
réduire la quantité de jetons (48) d'une unité pour chaque paquet TCP hors séquence qui est accepté.

14. Composant sans fil selon la revendication 13, dans lequel le composant sans fil (50) comporte des moyens pour mettre en tampon chaque paquet TCP de l'ensemble de paquets TCP hors séquence qui ne sont pas acceptés.

15. Composant sans fil selon la revendication 13, dans lequel le composant sans fil (50) comporte des moyens pour recevoir un paquet TCP transféré (42), accepter le paquet TCP transféré (42), et restaurer la quantité de jetons (48) à une quantité prédéterminée si le paquet TCP transféré (42) avait précédemment été demandé.

16. Composant sans fil selon la revendication 13, dans lequel le composant sans fil (50) est le point d'accès (20C), et dans lequel le point d'accès (20C) comporte des moyens pour accepter l'ensemble de paquets TCP hors séquence en émettant un paquet TCP de l'ensemble de paquets TCP hors séquence vers le dispositif mobile (26) pour chaque jeton de la quantité de jetons (48) présents dans le point d'accès (20C).

17. Composant sans fil selon la revendication 16, dans lequel le point d'accès (20C) comporte des moyens pour recevoir le paquet TCP transféré du point d'accès précédent (20B) auquel le dispositif mobile (26) était associé.

18. Composant sans fil selon la revendication 13, dans lequel le composant sans fil (50) est le dispositif mobile (26), et dans lequel le dispositif mobile (26) comporte des moyens pour accepter l'ensemble de paquets TCP hors séquence en recevant un paquet TCP de l'ensemble de paquets TCP hors séquence et en permettant le traitement du paquet TCP par le dispositif mobile pour chaque jeton de la quantité de jetons (48) présents dans le dispositif mobile.

19. Composant sans fil selon la revendication 13, dans lequel la quantité de jetons (48) comprend trois jetons.

20. Programme informatique comprenant un ensemble d'instructions qui y sont stockées, qui, lorsqu'exécuté par un processeur, implémente les étapes selon les revendications 1 à 12.
